# EUROPEAN PATENT APPLICATION

(11) **EP 4 783 605 A1**
(43) Date of publication of application: **29.07.2026**
(21) Application number: 24866980.6
(22) Date of filing: 27.06.2024
(51) Int. Cl.: H04Q 11/00, H04B 10/07

(54) **ABNORMAL ONU DETECTION METHOD, ELECTRONIC DEVICE AND COMPUTER-READABLE STORAGE MEDIUM**

(30) Priority: 21.09.2023 CN 202311234501
(71) Applicant: ZTE CORPORATION, Shenzhen, Guangdong 518057 (CN)
(72) Inventor: ZHONG, Yiming, Shenzhen, Guangdong 518057 (CN); HUANG, Xingang, Shenzhen, Guangdong 518057 (CN); ZHAN, Zhiguo, Shenzhen, Guangdong 518057 (CN); HE, Jiangyan, Shenzhen, Guangdong 518057 (CN); MA, Zhuang, Shenzhen, Guangdong 518057 (CN); LIU, Bo, Shenzhen, Guangdong 518057 (CN)
(74) Representative: Ziebig Hengelhaupt Intellectual Property Attorneys Patentanwaltskanzlei PartGmbB
(86) International application number: PCT/CN2024/102030
(87) International publication number: WO 2025/060561

(57) **Abstract**

The present application provides an abnormal ONU detection method, an electronic device and a computer-readable storage medium. The detection method comprises: checking a plurality of subcarrier bands (S202); when an abnormal subcarrier band is detected, scheduling an ONU in the abnormal subcarrier band to a test detection band among the plurality of subcarrier bands (S204); and determining whether an anomaly occurs in the test detection band and, on the basis of the determination result, determining an abnormal ONU in the abnormal subcarrier band (S206).

## Description

### CROSS-REFERENCE TO RELATED APPLICATIONS

The present application claims priority to Chinese Patent Application No. 202311234501.1, filed to the CNIPA on September 21, 2023, and entitled "ABNORMAL ONU DETECTION METHOD, ELECTRONIC DEVICE AND COMPUTER-READABLE STORAGE MEDIUM", which is incorporated herein by reference in its entirety.

### TECHNICAL FIELD

The present application relates to the technical field of passive optical networks, in particular to an abnormal ONU detection method, an electronic device, and a computer-readable storage medium.

### BACKGROUND

In recent years, an optical access network based on a time division multiplexing passive optical network (TDM-PON) technology has developed rapidly. In the related art, uplink and downlink transmission of a passive optical network may be achieved using multiple subcarriers. In a downlink direction, an optical line terminal (OLT) side broadcasts and sends subcarrier data to each optical network unit (ONU) sub node, and each ONU selectively receives data stream information from one or more subcarriers according to OLT scheduling. In an uplink direction, each ONU sends data to the OLT side for communication in a manner of protocol-scheduled time division frequency division multiplexing (TFDM).

In a current commercial network system of operators, there may be some ONUs that send signals in time slots not belonging to their allocated bandwidth or remain in a light-emitting state. These ONUs are called rogue ONUs. In the existence of the rogue ONUs in the system, it will affect normal communication of other ONUs accessing an OLT PON port. Therefore, it is necessary to identify and detect these abnormal rogue ONUs.

### SUMMARY

The present application provides an abnormal ONU detection method, an electronic device, and a computer-readable storage medium, which are used to solve the problem of how to detect an abnormal ONU.

In order to solve the above technical problems, the present application is implemented as follows.

In a first aspect, an abnormal ONU detection method is provided, and includes: detecting a plurality of subcarrier bands; scheduling, in a case where an abnormal subcarrier band is detected, an ONU in the abnormal subcarrier band to a test detection band among the plurality of subcarrier bands; and judging whether an anomaly occurs in the test detection band, and determining an abnormal ONU in the abnormal subcarrier band according to a judgment result.

In a second aspect, an electronic device is provided, including: a processor; and a memory, configured to store processor-executable instructions; wherein the processor is configured to execute the instructions, so as to implement the method as described in the first aspect.

In a third aspect, a computer-readable storage medium is provided, and instructions in the storage medium, when executed by a processor of an electronic device, cause the electronic device to be able to perform the method as described in the first aspect.

In a fourth aspect, a system for detecting an abnormal ONU is provided, and includes an OLT and a plurality of ONUs, wherein the OLT detects a plurality of subcarrier bands; the OLT schedules, in a case where an abnormal subcarrier band is detected, an ONU in the abnormal subcarrier band to a test detection band among the plurality of subcarrier bands; and the OLT judges whether an anomaly occurs in the test detection band, and determines an abnormal ONU in the abnormal subcarrier band according to a judgment result.

Based on the technical solutions provided in the embodiments of the present application, in a scenario where a PON system uses a plurality of subcarrier bands for uplink, downlink, and/or uplink and downlink transmission, after an abnormal subcarrier band is detected, the characteristics of multiple subcarriers may be utilized to schedule the ONU in the abnormal subcarrier band to other subcarrier bands (i.e., the test detection band) of the plurality of subcarrier bands, and judge whether the scheduled ONU is abnormal by whether an anomaly occurs in other subcarrier bands. Therefore, it is possible to effectively detect which ONUs in the abnormal subcarrier bands are abnormal ONUs, thereby achieving effective detection of the abnormal ONUs.

### BRIEF DESCRIPTION OF DRAWING(S)

To illustrate the technical solutions in the present application or in the related art more clearly, the accompanying drawings required for describing the embodiments or the related art will be briefly introduced below. Apparently, the accompanying drawings in the following description are only some embodiments recorded in the present application, and those ordinarily skilled in the art may still derive other accompanying drawings from these accompanying drawings without creative efforts.
FIG. 1 is a schematic diagram where a PON uses multiple subcarriers for uplink and downlink transmission in one embodiment of the present application.
FIG. 2 is a schematic flowchart of an abnormal ONU detection method in one embodiment of the present application.
FIG. 3 is a schematic flowchart of an abnormal ONU detection method in one embodiment of the present application.
FIG. 4 is a schematic flowchart of an abnormal ONU detection method in one embodiment of the present application.
FIG. 5 is a schematic flowchart of an abnormal ONU detection method in one embodiment of the present application.
FIG. 6 is a schematic flowchart of an abnormal ONU detection method in one embodiment of the present application.
FIG. 7 is a schematic structural diagram of an electronic device in one embodiment of the present application.
FIG. 8 is a schematic structural diagram of an apparatus for detecting an abnormal ONU in one embodiment of the present application.

### DETAILED DESCRIPTION

In order to make those skilled in the art understand the technical solutions in the present application better, the technical solutions in the present application will be described below clearly and completely with reference to the accompanying drawings in one or more embodiments of the present application. Apparently, the described embodiments are only part of the embodiments of the present application, but not all the embodiments. All other embodiments obtained by those ordinarily skilled in the art based on the embodiments in the present application without making creative efforts should fall within the scope of protection of the present application.

Terms "first," "second" and the like in the present application and the claims are used for distinguishing similar objects, but are not used for describing a specific sequence or precedence order. It should be understood that data used in this way may be interchanged where appropriate, so that the embodiments of the present application can be implemented according to sequences other than those illustrated or described here. In addition, "and/or" in the present application and the claims represents at least one of the connected objects. A character "/" generally represents that the association objects in front of and behind "/" are in an "or" relationship.

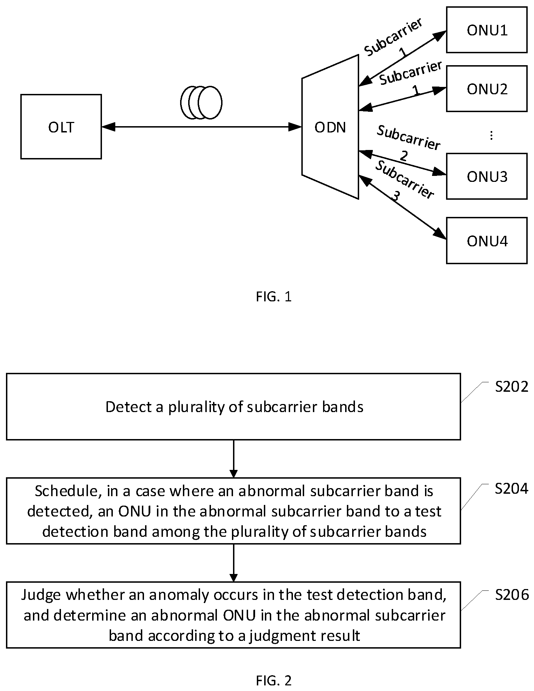

It should be noted that the technical solutions provided in the embodiments of the present application may be applied to a PON system architecture that uses multiple subcarriers for uplink transmission, may also be applied to a PON system architecture that uses multiple subcarriers for downlink transmission, and may further be applied to a PON system architecture that uses multiple subcarriers for uplink and downlink transmission. These PON system architectures may be 100 G or 200 G PON system architectures, for example. Based on the technical solutions provided in the embodiments of the present application, an abnormal ONU may be effectively detected in these PON system architectures. Under a conventional PON system architecture, a single carrier manner is used, and all ONUs multiplex one uplink wavelength and one downlink wavelength for data communication. A multiple subcarrier manner refers to a change from previous single-wavelength communication to multiplesubcarrier wavelength communication in an uplink and/or downlink direction. A manner for generating the subcarrier wavelength may be frequency division multiplexing (FDM), wavelength division multiplexing (WDM), and other various manners. Taking the use of multiple subcarriers for uplink and downlink transmission as an example, a schematic diagram where the PON system architecture uses the multiple subcarriers for uplink and downlink transmission may be shown in FIG. 1. In FIG. 1, communication between an OLT and a plurality of ONUs is performed through an optical distribution network (ODN), where a topological structure of the PON adopts a point-to-multipoint form. When uplink and downlink transmission is performed based on the multiple subcarriers, the plurality of ONUs may correspond to one subcarrier (such as ONU1 and ONU2 corresponding to one subcarrier 1 as shown in FIG. 1), and each ONU sends uplink data to the OLT in a time-division manner. Alternatively, a single ONU may completely occupy a single subcarrier (such as ONU3 occupying one subcarrier 2 and ONU4 occupying one subcarrier 3 as shown in FIG. 1), and the OLT may schedule and distribute the ONUs according to traffic, so that the traffic on each subcarrier is as smooth as possible. In FIG. 1, when an abnormal ONU occurs in a certain subcarrier band, an abnormal ONU may be effectively detected based on the technical solutions provided by the embodiments of the present application.

It should be noted that only FIG. 1 is used here as an example to illustrate a scenario of using multiple subcarriers for uplink and downlink transmission. In a scenario of using the multiple subcarriers for uplink and downlink transmission or downlink transmission, communication between the OLT and the plurality of ONUs may also be achieved through the ODN. The plurality of ONUs may correspond to one subcarrier, or a single ONU may completely occupy one subcarrier. The OLT schedules and distributes the ONUs according to the traffic. When an abnormal ONU occurs in a certain subcarrier band, the abnormal ONU may also be effectively detected based on the technical solutions provided by the embodiments of the present application.

The technical solutions provided by the embodiments of the present application are described in detail below in combination with the accompanying drawings.

FIG. 2 is a schematic flowchart of an abnormal ONU detection method in one embodiment of the present application. The abnormal ONU detection method shown in FIG. 2 may be performed by the OLT shown in FIG. 1. The abnormal ONU detection method shown in FIG. 2 is described as follows.

S202: a plurality of subcarrier bands are detected.

In a scenario where the OLT performs uplink, downlink, and/or uplink and downlink transmission with a plurality of ONUs based on a manner of multiple subcarriers, the plurality of subcarrier bands may be detected to determine whether an abnormal subcarrier band exists in the plurality of subcarrier bands. The abnormal subcarrier band here may be a subcarrier band where a communication anomaly occurs. The communication anomaly occurring in the subcarrier band may mean a communication anomaly occurring on one or more ONUs in the subcarrier band, that is, the subcarrier band includes one or more abnormal ONUs (also known as rogue ONUs). The communication anomaly occurring in the ONU may mean that the ONU sends a signal in a time slot not belonging to its allocated bandwidth or the ONU remains in a light-emitting state.

Optionally, in one implementation, when the plurality of subcarriers are detected, at least one of the following may be included:
detecting whether a bit error occurs in the plurality of subcarrier bands;
detecting whether a packet loss occurs in the plurality of subcarrier bands; or
detecting whether an abnormal fluctuation occurs in power of the plurality of subcarrier bands.

Considering that in a case where the subcarrier band includes the abnormal ONU, that is, in a case where the communication anomaly occurs in the subcarrier band, the subcarrier band usually experiences the bit error, the packet loss (which may be packet loss during uplink transmission), and/or the abnormal fluctuation in the power. Therefore, when the plurality of subcarrier bands are detected, at least one of whether the bit error occurs, whether the packet loss occurs or whether the abnormal fluctuation occurs in the power in the plurality of subcarrier bands may be detected. During detection, each subcarrier band may be detected respectively, that is, for each subcarrier band, at least one of whether the bit error occurs, whether the packet loss occurs or whether the abnormal fluctuation occurs in the power may be detected.

After detecting the plurality of subcarrier bands, for each subcarrier band, if a detection result includes at least one of the bit error occurring in the subcarrier band, the packet loss occurring in the subcarrier band, and the abnormal fluctuation occurring in the power of the subcarrier band, it may be determined that the communication anomaly occurs in the subcarrier band, and the subcarrier band is an abnormal subcarrier band. Conversely, if the detection result is that no bit error occurs, no packet loss occurs, and no abnormal fluctuation occurs in the power of the subcarrier band, it may be determined that no communication anomaly occurs in the subcarrier band, and the subcarrier band is a normal subcarrier band. In this way, after detecting the plurality of subcarrier bands, which subcarrier bands among the plurality of subcarrier bands are normal subcarrier bands and which subcarrier bands are abnormal subcarrier bands may be determined.

It should be noted that in other possible implementations, other detection methods may also be used to detect the plurality of subcarrier bands, as long as abnormal subcarrier bands can be detected. Here, other detection methods will not be illustrated one by one.

In the embodiment of the present application, after detecting the plurality of subcarrier bands, if there are one or more abnormal subcarrier bands, following S204 may be performed. If there are no abnormal subcarrier bands and they are all normal subcarrier bands, S202 may continue to be performed, that is, the plurality of subcarrier bands continue to be detected, or the detection process may be ended.

S204: in a case where an abnormal subcarrier band is detected, an ONU in the abnormal subcarrier band is scheduled to a test detection band among the plurality of subcarrier bands.

In the case where the abnormal subcarrier band is detected, for each abnormal subcarrier band, the ONU in the abnormal subcarrier band may be scheduled to the test detection band among the plurality of subcarrier bands, and data transmission is performed based on the test detection band.

When the ONU in the abnormal subcarrier band is scheduled to the test detection band, optionally, the ONUs in the abnormal subcarrier band may be scheduled to the test detection band in N separate times, with one ONU scheduled to the test detection band each time, where N is the number of ONUs in the abnormal subcarrier band. That is, the ONUs in the abnormal subcarrier band may be sequentially scheduled one by one to the test detection band. For example, it is assumed that there are 5 ONUs in the abnormal subcarrier band, scheduling these 5 ONUs to the test detection band may be divided into 5 times, with one ONU scheduled to the test detection band each time. Optionally, in one possible implementation, the plurality of ONUs may also be scheduled to the test detection band each time. For example, still taking the above abnormal subcarrier band including 5 ONUs as an example, scheduling these 5 ONUs to the test detection band may be divided into 3 times: 2 ONUs are scheduled for the first time, 2 ONUs are scheduled for the second time, and 1 ONU is scheduled for the third time.

It should be noted that considering that if the plurality of ONUs are scheduled to the test detection band each time, it is impossible to accurately determine which ONU among the plurality of scheduled ONUs is the abnormal ONU when an anomaly occurs in the test detection band. Therefore, in the embodiment of the present application, it is preferable to schedule one ONU to the test detection band each time when scheduling the ONUs.

When the ONU in the abnormal subcarrier band is scheduled to the test detection band, in one possible implementation, an indication message may be sent by the OLT to the ONU in the abnormal subcarrier band through broadcasting (which may correspond to a case where uplink communication of the abnormal ONU is abnormal, but downlink communication is not abnormal). The indication message is used to instruct the ONU in the abnormal subcarrier band to adjust a wavelength of its laser from the abnormal subcarrier band to the test detection band. After receiving the indication message from the OLT, the ONU in the abnormal subcarrier band may adjust the wavelength of the laser from the abnormal subcarrier band to the test detection band according to the indication message. Therefore, the ONU in the abnormal subcarrier band may be scheduled to the test detection band. Certainly, in other possible implementations, the ONU in abnormal subcarrier band may also be scheduled to the test detection band through other methods. Here, other possible implementations will not be illustrated one by one.

The test detection band may be a certain subcarrier band among the plurality of other subcarrier bands except for the abnormal subcarrier band. Optionally, in one implementation, the test detection band may be a certain idle subcarrier band among the plurality of subcarrier bands except for the abnormal subcarrier band, that is, a certain unused subcarrier band among the plurality of subcarrier bands is used as the test detection band. In another implementation, the test detection band may also be a subcarrier band among the plurality of subcarrier bands that does not have an anomaly and has traffic less than a preset threshold (which may be set according to actual needs), that is, a certain normal subcarrier band with a smaller traffic among the plurality of subcarrier bands is used as the test detection band. For example, a subcarrier band with the smallest traffic among the plurality of subcarrier bands may be used as the test detection band, or one band may be randomly selected from the plurality of subcarrier bands less than the preset threshold as the test detection band, or, one subcarrier band with smaller traffic may further be selected as the test detection band according to actual service needs, and the selection manner for subcarrier bands with the small traffic is not limited here.

It should be noted that the reason why the embodiment of the present application uses the normal subcarrier band with the smaller traffic as the test detection band is to ensure that after the ONU in the abnormal subcarrier band is scheduled to the normal subcarrier band, the traffic in the normal subcarrier band will not be too large, so as to avoid affecting the normal communication of an original ONU in the normal subcarrier band. In practical application scenarios, if an idle subcarrier band exists in the plurality of subcarrier bands, the idle subcarrier band may be used as the test detection band, or a certain subcarrier band with the smaller traffic in the normal subcarrier band may be used as the test detection band. If the idle subcarrier band does not exist in the plurality of subcarrier bands, a certain subcarrier band with the smaller traffic in the normal subcarrier band may be used as the test detection band.

S206: whether an anomaly occurs in the test detection band is judged, and an abnormal ONU in the abnormal subcarrier band is determined according to a judgment result.

After the ONU in the abnormal subcarrier band is scheduled to the test detection band, the ONU in the abnormal subcarrier band may perform data transmission with the OLT based on the test detection band. At this time, whether the anomaly occurs in the test detection band may be judged, and the abnormal ONU in the abnormal subcarrier band is determined according to the judgment result.

As previously mentioned, when the ONU in the abnormal subcarrier band is scheduled to the test detection band, the ONUs in the abnormal subcarrier band may be sequentially scheduled one by one to the test detection band. In this way, when judging whether the anomaly occurs in the test detection band, in a case where one to-be-detected ONU in the abnormal subcarrier band is scheduled to the test detection band each time, whether the anomaly occurs in the test detection band may be judged, and the abnormal ONU in the abnormal subcarrier band is determined according to the judgment result.

When the abnormal ONU in the abnormal subcarrier band is determined according to the judgment result, specifically, after one to-be-detected ONU in the abnormal subcarrier band is scheduled to the test detection band, the to-be-detected ONU may perform data transmission based on the test detection band. When the to-be-detected ONU performs data transmission based on the test detection band, the test detection band may be detected, and whether the anomaly occurs in the test detection band according to a detection result. When the test detection band is detected, the specific implementation may refer to the specific implementation for detecting the plurality of subcarrier bands recorded in S202 above, which will not be explained in detail here.

After whether the anomaly occurs in the test detection band is judged, the judgment result may include no anomaly occurring in the test detection band and the anomaly occurring in the test detection band. The following will explain how to determine the abnormal ONU in the abnormal subcarrier band for these two judgment results.

If the judgment result is no anomaly occurring in the test detection band, it may indicate two cases. The first case is that the to-be-detected ONU is a normal ONU, and the second case is that the to-be-detected ONU is an abnormal ONU and cannot be successfully scheduled or normally scheduled to the test detection band. In either case, whether the ONUs in the abnormal subcarrier band have been traversed may be judged, that is, whether all ONUs in the abnormal subcarrier band have been scheduled to the test detection band is judged. If the ONUs in the abnormal subcarrier band have not been traversed, the detection process of the abnormal ONU may continue, that is, the ONUs that have not been traversed are scheduled to the test detection band. If the ONUs in the abnormal subcarrier band have been traversed, whether an ONU not successfully scheduled exists in the abnormal subcarrier band may further be judged. If the ONU not successfully scheduled exists, it may indicate that these ONUs are abnormal and cannot be successfully scheduled. At this time, the ONU not successfully scheduled may be determined as an abnormal ONU. If no ONU not successfully scheduled exists, it may indicate that the to-be-detected ONU scheduled this time is a normal ONU. Afterwards, since the ONUs in the abnormal subcarrier band have been traversed, the detection process for abnormal ONUs may be ended. When ONUs that have not been traversed are scheduled to the test detection band, the ONUs may be sequentially scheduled one by one to the test detection band, and after scheduling each ONU that has not been traversed to the test detection band, S206 may be performed. This can form a cyclic detection process for the abnormal ONUs until all the ONUs that have not been traversed are scheduled to the test detection band, and then the detection process for the abnormal ONUs is ended.

If the anomaly occurs in the test detection band, it may indicate that the to-be-detected ONU scheduled at this time is successfully scheduled to the test detection band, and the functionality of the to-be-detected ONU is still abnormal, resulting in an anomaly in the detection band. At this time, the to-be-detected ONU may be determined as an abnormal ONU. After the abnormal ONU is determined, the abnormal ONU may be scheduled to an abandoned subcarrier band of the plurality of subcarrier bands, or the abnormal ONU may also be scheduled to the abnormal subcarrier band. The abandoned subcarrier band may be a certain unused subcarrier band among the plurality of subcarrier bands, or may also be a subcarrier band specifically used to carry an abnormal ONU among the plurality of subcarrier bands.

Optionally, if the abnormal ONU is scheduled to the abandoned subcarrier band, the abnormal subcarrier band may be detected after the abnormal ONU is scheduled to the abandoned subcarrier band, and whether the abnormal subcarrier band returns to normal is judged according to the detection result. When the abnormal subcarrier band is detected, the specific implementation may refer to the specific implementation for detecting the plurality of subcarrier bands recorded in S202 above, which will not be explained in detail here. If the abnormal subcarrier band returns to normal, it may indicate that the abnormal ONU in the abnormal subcarrier band has been detected. At this point, the anomaly detection of the ONU may be ended, that is, the detection process of the abnormal ONU may be ended without scheduling other ONUs that have not been traversed in the abnormal subcarrier band to the test detection band. If the abnormal subcarrier band does not return to normal, it may indicate that there are still undetected abnormal ONUs in the abnormal subcarrier band. At this time, whether the ONUs in the abnormal subcarrier band have been traversed may be judged. If the ONUs in the abnormal subcarrier band have been traversed, it may indicate that there is an ONU not successfully scheduled in the abnormal subcarrier band during the previous traversal scheduling. At this point, the ONU not successfully scheduled may be determined as the abnormal ONU. If the ONUs in the abnormal subcarrier band have not been traversed, the detection process of the abnormal ONU may continue, that is, the ONUs that have not been traversed are scheduled to the test detection band. When ONUs that have not been traversed are scheduled to the test detection band, the ONUs may be sequentially scheduled one by one to the test detection band, and after scheduling each ONU that has not been traversed to the test detection band, S206 may be performed. This can form a cyclic detection process for the abnormal ONUs until all the ONUs that have not been traversed are scheduled to the test detection band, and then the detection process for the abnormal ONUs is ended.

Optionally, if the abnormal ONU is scheduled to the abnormal subcarrier band, whether the ONUs in the abnormal subcarrier band have been traversed may be judged after the abnormal ONU is scheduled to the abnormal subcarrier band. If the ONUs in the abnormal subcarrier band have been traversed, the detection process of the abnormal ONUs may be ended. At this point, all ONUs in the abnormal subcarrier band are abnormal ONUs (including abnormal ONUs that can be successfully scheduled, and may include abnormal ONUs that cannot be successfully scheduled). If the ONUs in the abnormal subcarrier band have not been traversed, the detection process of the abnormal ONU may continue, that is, the ONUs that have not been traversed are scheduled to the test detection band. When ONUs that have not been traversed are scheduled to the test detection band, the ONUs may be sequentially scheduled one by one to the test detection band, and after scheduling each ONU that has not been traversed to the test detection band, S206 may be performed. This can form a cyclic detection process for the abnormal ONUs until all the ONUs that have not been traversed are scheduled to the test detection band, and then the detection process for the abnormal ONUs is ended.

After scheduling all the ONUs in the abnormal subcarrier band to the test detection band of the plurality of subcarrier bands based on the above method, and determining the abnormal ONUs in the abnormal subcarrier band according to whether the anomaly occurs in the test detection band, all the abnormal ONUs in the abnormal subcarrier band may ultimately be detected, and these abnormal ONUs will exist in the abandoned subcarrier band and/or the abnormal subcarrier band. Specifically, if all the abnormal ONUs are abnormal ONUs that cannot be successfully scheduled, all the abnormal ONUs will exist in the abnormal subcarrier band. If all the abnormal ONUs are abnormal ONUs that can be successfully scheduled, all the abnormal ONUs will exist in the abandoned subcarrier band (for a case of scheduling the detected abnormal ONUs to the abandoned subcarrier band) or the abnormal subcarrier band (for a case of scheduling the detected abnormal ONUs to the abnormal subcarrier band). If the abnormal ONUs include the abnormal ONUs that can be successfully scheduled and the abnormal ONUs that cannot be successfully scheduled, the abnormal ONUs will exist in the abandoned subcarrier band and the abnormal subcarrier band (for a case of scheduling the detected abnormal ONUs that can be successfully scheduled to the abandoned subcarrier band), or all exist in the abnormal subcarrier band (for a case of scheduling the detected abnormal ONUs that can be successfully scheduled to the abnormal subcarrier band).

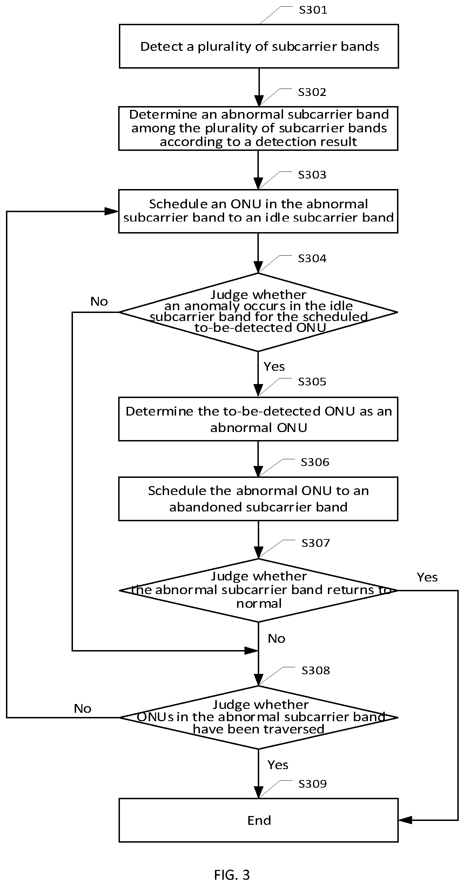

For the convenience of understanding the detection process of the abnormal ONU detection method provided in the embodiment of the present application, reference may be made to the embodiments shown in FIG. 3 to FIG. 6 below.

FIG. 3 is a schematic flowchart of an abnormal ONU detection method in one embodiment of the present application. The method may include the following steps.

S301: a plurality of subcarrier bands are detected.

S302: an abnormal subcarrier band among the plurality of subcarrier bands is determined according to a detection result.

S303: an ONU in the abnormal subcarrier band is scheduled to an idle subcarrier band.

The number of abnormal subcarrier bands may be one or more, and for each abnormal subcarrier band, a detection process of the abnormal ONU may be performed separately. For any abnormal subcarrier band, when the abnormal ONU is detected, the ONU in the abnormal subcarrier band may be scheduled to the idle subcarrier band. During scheduling, optionally, whether an idle subcarrier band exists in the plurality of subcarrier bands may be determined first. If yes, the ONU in the abnormal subcarrier band may be scheduled to the idle subcarrier band. If not, the ONU in the abnormal subcarrier band may be scheduled to a certain subcarrier band with smaller traffic in the plurality of subcarrier bands. This embodiment may be illustrated by taking the existence of the idle subcarrier band as an example. When the ONUs in the abnormal subcarrier band are scheduled to the idle subcarrier band, the ONUs in the abnormal subcarrier band may be scheduled one by one to the idle subcarrier band. Every time one to-be-detected ONU is scheduled to the idle subcarrier band, the ONU may perform data transmission based on the idle subcarrier band. During data transmission, S304 may be performed.

S304: whether an anomaly occurs in the idle subcarrier band is judged for the scheduled to-be-detected ONU.

After scheduling for one time, for the to-be-detected ONU scheduled this time, whether the anomaly occurs in the idle subcarrier band may be judged when the to-be-detected ONU performs data transmission based on the idle subcarrier band. If the anomaly occurs in the idle subcarrier band, S305 may be performed. If no anomaly occurs in the idle subcarrier band, it may indicate two cases. One case is that the to-be-detected ONU is a normal ONU, so no anomaly occurs in the idle subcarrier band when performing data transmission based on the idle subcarrier band. The other case is that the to-be-detected ONU is an abnormal ONU and cannot be successfully scheduled to the idle subcarrier band, so no anomaly occurs in the idle subcarrier band. At this time, S308 may be performed regardless of the case.

S305: the to-be-detected ONU is determined as an abnormal ONU.

S306: the abnormal ONU is scheduled to an abandoned subcarrier band.

S307: whether the abnormal subcarrier band returns to normal is judged.

If the abnormal subcarrier band returns to normal, it may indicate that the abnormal ONU in the abnormal subcarrier band has been detected, and the detection process may be ended, that is, S309 is performed. If the abnormal subcarrier band does not return to normal, it may indicate that the abnormal subcarrier band further includes the abnormal ONU. At this time, S308 may be performed.

S308: whether ONUs in the abnormal subcarrier band have been traversed is judged.

Whether the ONUs in the abnormal subcarrier band have been traversed is judged, that is, whether all the ONUs in the abnormal subcarrier band have been scheduled to the idle subcarrier band is judged. If yes, the detection process may be ended, that is, S309 is performed. If not, the detection process returns to perform S303, that is, the ONUs in the abnormal subcarrier band continue to be scheduled to the idle subcarrier band. The scheduling here may be scheduling the unscheduled ONUs in the abnormal subcarrier band one by one to the idle subcarrier band.

It should be noted that if S308 is performed when it is judged that no anomaly occurs in the idle subcarrier band in S304, and when S308 is performed, the judgment result is that the ONUs in the abnormal subcarrier band have been traversed, then whether the abnormal subcarrier band returns to normal may be further judged. If the abnormal subcarrier band does not return to normal, it may indicate that ONUs not successfully scheduled exist in the abnormal subcarrier band. These ONUs are abnormal ONUs and are still retained in the abnormal subcarrier band when scheduled. At this time, these ONUs not successfully scheduled may be determined as abnormal ONUs. If the abnormal subcarrier band returns to normal, it may be determined that the to-be-detected ONU scheduled this time is a normal ONU. If S308 is performed in S307 when it is judged that the abnormal subcarrier band does not return to normal, and when S308 is preformed, the judgment result is that the ONUs in the abnormal subcarrier band have been traversed, it may indicate that ONUs not successfully scheduled during previous scheduling exist in the abnormal subcarrier band, and these ONUs may be determined as abnormal ONUs at this time.

S309: the detection process is ended.

Based on the embodiment shown in FIG. 3, after the detection process is ended, all the abnormal ONUs exist in the abandoned subcarrier band (for a case where all the abnormal ONUs can be successfully scheduled), or exist in the abnormal subcarrier band (for a case where all the abnormal ONUs cannot be successfully scheduled), or exist in both the abandoned subcarrier band and the abnormal subcarrier band (for a case where the abnormal ONUs include abnormal ONUs that can be successfully scheduled and abnormal ONUs that cannot be successfully scheduled).

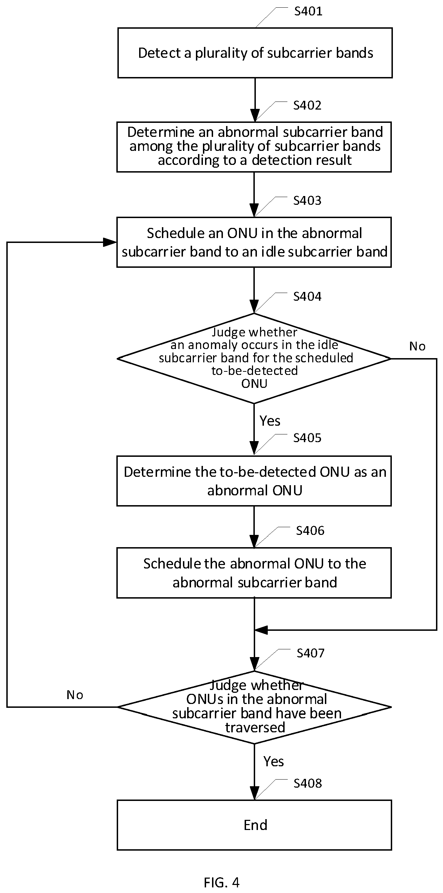

FIG. 4 is a schematic flowchart of an abnormal ONU detection method in one embodiment of the present application. The method may include the following steps.

S401: a plurality of subcarrier bands are detected.

S402: an abnormal subcarrier band among the plurality of subcarrier bands is determined according to a detection result.

S403: an ONU in the abnormal subcarrier band is scheduled to an idle subcarrier band.

The number of abnormal subcarrier bands may be one or more, and for each abnormal subcarrier band, a detection process of the abnormal ONU may be performed separately. For any abnormal subcarrier band, when the abnormal ONU is detected, the ONU in the abnormal subcarrier band may be scheduled to the idle subcarrier band. During scheduling, optionally, whether an idle subcarrier band exists in the plurality of subcarrier bands may be determined first. If yes, the ONU in the abnormal subcarrier band may be scheduled to the idle subcarrier band. If not, the ONU in the abnormal subcarrier band may be scheduled to a certain subcarrier band with smaller traffic in the plurality of subcarrier bands. This embodiment may be illustrated by taking the existence of the idle subcarrier band as an example. When the ONUs in the abnormal subcarrier band are scheduled to the idle subcarrier band, the ONUs in the abnormal subcarrier band may be scheduled one by one to the idle subcarrier band. Every time one to-be-detected ONU is scheduled to the idle subcarrier band, the ONU may perform data transmission based on the idle subcarrier band. During data transmission, S404 may be performed.

S404: whether an anomaly occurs in the idle subcarrier band is judged for the scheduled to-be-detected ONU.

After scheduling for one time, for the to-be-detected ONU scheduled this time, whether the anomaly occurs in the idle subcarrier band may be judged when the to-be-detected ONU performs data transmission based on the idle subcarrier band. If the anomaly occurs in the idle subcarrier band, S405 may be performed. If no anomaly occurs in the idle subcarrier band, it may indicate two cases. One case is that the to-be-detected ONU is a normal ONU, so no anomaly occurs in the idle subcarrier band when performing data transmission based on the idle subcarrier band. The other case is that the to-be-detected ONU is an abnormal ONU and cannot be successfully scheduled to the idle subcarrier band, so no anomaly occurs in the idle subcarrier band. At this time, S407 may be performed regardless of the case.

S405: the to-be-detected ONU is determined as an abnormal ONU.

S406: the abnormal ONU is scheduled to the abnormal subcarrier band.

S407: whether ONUs in the abnormal subcarrier band have been traversed is judged.

Whether the ONUs in the abnormal subcarrier band have been traversed is judged, that is, whether all the ONUs in the abnormal subcarrier band have been scheduled to the idle subcarrier band is judged. If yes, the detection process may be ended, that is, S408 is performed. If not, the detection process returns to perform S403, that is, the ONUs in the abnormal subcarrier band continue to be scheduled to the idle subcarrier band. The scheduling here may be scheduling the unscheduled ONUs in the abnormal subcarrier band one by one to the idle subcarrier band.

It should be noted that if S407 is performed when it is judged that no anomaly occurs in the idle subcarrier band in S404, and when S407 is preformed, the judgment result is that the ONUs in the abnormal subcarrier band have been traversed, it may indicate that the abnormal ONU only exists in the abnormal subcarrier band, and at this time, the ONU in the abnormal subcarrier band may be determined as the abnormal ONU.

S408: the detection process is ended.

Based on the embodiment shown in FIG. 4, after the detection process is ended, all the abnormal ONUs exist in the abnormal subcarrier band, and the abnormal ONUs in the abnormal subcarrier band include abnormal ONUs that can be successfully scheduled and/or abnormal ONUs that cannot be successfully scheduled.

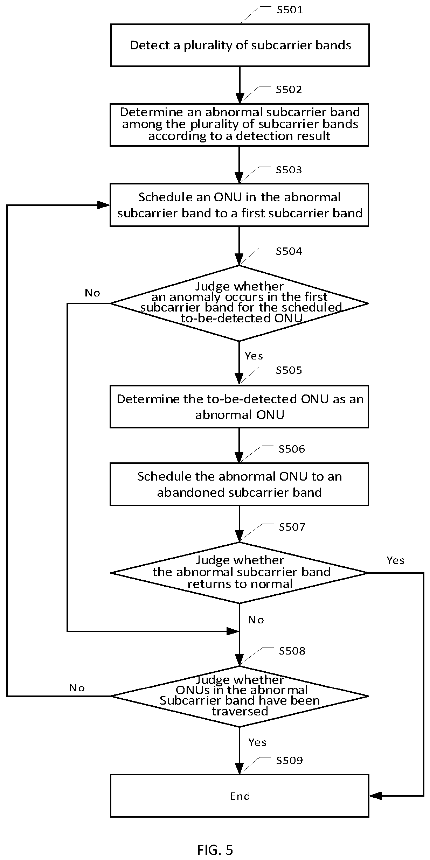

FIG. 5 is a schematic flowchart of an abnormal ONU detection method in one embodiment of the present application. The method may include the following steps.

S501: a plurality of subcarrier bands are detected.

S502: an abnormal subcarrier band among the plurality of subcarrier bands is determined according to a detection result.

S503: an ONU in the abnormal subcarrier band is scheduled to a first subcarrier band.

The number of abnormal subcarrier bands may be one or more, and for each abnormal subcarrier band, a detection process of the abnormal ONU may be performed separately. For any abnormal subcarrier band, when the abnormal ONU is detected, the ONU in the abnormal subcarrier band may be scheduled to the first subcarrier band. The first subcarrier band may be a certain normal subcarrier band with traffic less than a preset threshold among the plurality of subcarrier bands, or may also be a normal subcarrier band with smallest traffic among the plurality of subcarrier bands. During scheduling, optionally, the first subcarrier band in the plurality of subcarrier bands may be determined first, and then the ONU in the abnormal subcarrier band is scheduled to the first subcarrier band. When the ONUs in the abnormal subcarrier band are scheduled to the first subcarrier band, the ONUs in the abnormal subcarrier band may be scheduled one by one to the first subcarrier band. Every time one to-be-detected ONU is scheduled to the first subcarrier band, the ONU may perform data transmission based on the first subcarrier band. During data transmission, S504 may be performed.

S504: whether an anomaly occurs in the first subcarrier band is judged for the scheduled to-be-detected ONU.

After scheduling for one time, for the to-be-detected ONU scheduled this time, whether the anomaly occurs in the first subcarrier band may be judged when the to-be-detected ONU performs data transmission based on the first subcarrier band. If the anomaly occurs in the first subcarrier band, S505 may be performed. If no anomaly occurs in the first subcarrier band, it may indicate two cases. One case is that the to-be-detected ONU is a normal ONU, so no anomaly occurs in the first subcarrier band when performing data transmission based on the first subcarrier band. The other case is that the to-be-detected ONU is an abnormal ONU and cannot be successfully scheduled to the first subcarrier band, so no anomaly occurs in the first subcarrier band. At this time, S508 may be performed regardless of the case.

S505: the to-be-detected ONU is determined as an abnormal ONU.

S506: the abnormal ONU is scheduled to an abandoned subcarrier band.

S507: whether the abnormal subcarrier band returns to normal is judged.

If the abnormal subcarrier band returns to normal, it may indicate that the abnormal ONU in the abnormal subcarrier band has been detected, and the detection process may be ended, that is, S509 is performed. If the abnormal subcarrier band does not return to normal, it may indicate that the abnormal subcarrier band further includes the abnormal ONU. At this time, S508 may be performed.

S508: whether ONUs in the abnormal subcarrier band have been traversed is judged.

Whether the ONUs in the abnormal subcarrier band have been traversed is judged, that is, whether all ONUs in the abnormal subcarrier band have been scheduled to the first subcarrier band is judged. If yes, the detection process may be ended, that is, S509 is performed. If not, the detection process returns to perform S503, that is, the ONUs in the abnormal subcarrier band continue to be scheduled to the first subcarrier band. The scheduling here may be scheduling the unscheduled ONUs in the abnormal subcarrier band one by one to the first subcarrier band.

It should be noted that if S508 is performed when it is judged that no anomaly occurs in the first subcarrier band in S504, and when S508 is performed, the judgment result is that the ONUs in the abnormal subcarrier band have been traversed, then whether the abnormal subcarrier band returns to normal may be further judged. If the abnormal subcarrier band does not return to normal, it may indicate that ONUs not successfully scheduled exist in the abnormal subcarrier band. These ONUs are abnormal ONUs and are still retained in the abnormal subcarrier band when scheduled. At this time, these ONUs not successfully scheduled may be determined as abnormal ONUs. If the abnormal subcarrier band returns to normal, it may be determined that the to-be-detected ONU scheduled this time is a normal ONU. If S508 is performed when it is judged that the abnormal subcarrier band does not return to normal in S507, and when S508 is preformed, the judgment result is that the ONUs in the abnormal subcarrier band have been traversed, it may indicate that ONUs not successfully scheduled during previous scheduling exist in the abnormal subcarrier band, and these ONUs may be determined as abnormal ONUs at this time.

S509: the detection process is ended.

Based on the embodiment shown in FIG. 5, after the detection process is ended, all the abnormal ONUs exist in the abandoned subcarrier band (for a case where all the abnormal ONUs can be successfully scheduled), or exist in the abnormal subcarrier band (for a case where all the abnormal ONUs cannot be successfully scheduled), or exist in both the abandoned subcarrier band and the abnormal subcarrier band (for a case where the abnormal ONUs include abnormal ONUs that can be successfully scheduled and abnormal ONUs that cannot be successfully scheduled).

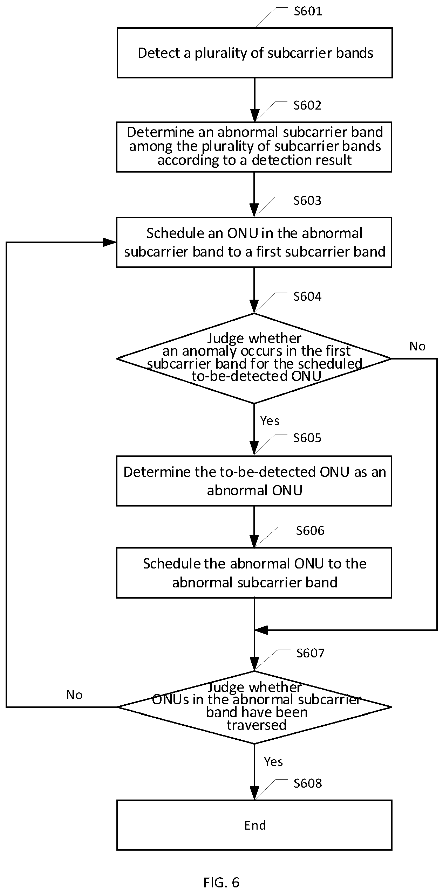

FIG. 6 is a schematic flowchart of an abnormal ONU detection method in one embodiment of the present application. The method may include the following steps.

S601: a plurality of subcarrier bands are detected.

S602: an abnormal subcarrier band among the plurality of subcarrier bands is determined according to a detection result.

S603: an ONU in the abnormal subcarrier band is scheduled to a first subcarrier band.

The number of abnormal subcarrier bands may be one or more, and for each abnormal subcarrier band, a detection process of the abnormal ONU may be performed separately. For any abnormal subcarrier band, when the abnormal ONU is detected, the ONU in the abnormal subcarrier band may be scheduled to the first subcarrier band. The first subcarrier band may be a certain normal subcarrier band with traffic less than a preset threshold among the plurality of subcarrier bands, or may also be a normal subcarrier band with smallest traffic among the plurality of subcarrier bands. During scheduling, optionally, the first subcarrier band in the plurality of subcarrier bands may be determined first, and then the ONU in the abnormal subcarrier band is scheduled to the first subcarrier band. When the ONUs in the abnormal subcarrier band are scheduled to the first subcarrier band, the ONUs in the abnormal subcarrier band may be scheduled one by one to the first subcarrier band. Every time one to-be-detected ONU is scheduled to the first subcarrier band, the ONU may perform data transmission based on the first subcarrier band. During data transmission, S604 may be performed.

S604: whether an anomaly occurs in the first subcarrier band is judged for the scheduled to-be-detected ONU.

After scheduling for one time, for the to-be-detected ONU scheduled this time, whether the anomaly occurs in the first subcarrier band may be judged when the to-be-detected ONU performs data transmission based on the first subcarrier band. If the anomaly occurs in the first subcarrier band, S605 may be performed. If no anomaly occurs in the first subcarrier band, it may indicate two cases. One case is that the to-be-detected ONU is a normal ONU, so no anomaly occurs in the first subcarrier band when performing data transmission based on the first subcarrier band. The other case is that the to-be-detected ONU is an abnormal ONU and cannot be successfully scheduled to the first subcarrier band, so no anomaly occurs in the first subcarrier band. At this time, S607 may be performed regardless of the case.

S605: the to-be-detected ONU is determined as an abnormal ONU.

S606: the abnormal ONU is scheduled to the abnormal subcarrier band.

S607: whether ONUs in the abnormal subcarrier band have been traversed is judged.

Whether the ONUs in the abnormal subcarrier band have been traversed is judged, that is, whether all ONUs in the abnormal subcarrier band have been scheduled to the first subcarrier band is judged. If yes, the detection process may be ended, that is, S608 is performed. If not, the detection process returns to perform S603, that is, the ONUs in the abnormal subcarrier band continue to be scheduled to the first subcarrier band. The scheduling here may be scheduling the unscheduled ONUs in the abnormal subcarrier band one by one to the first subcarrier band.

It should be noted that if S607 is performed when it is judged that no anomaly occurs in the first subcarrier band in S604, and when S607 is preformed, the judgment result is that the ONUs in the abnormal subcarrier band have been traversed, it may indicate that the abnormal ONU only exists in the abnormal subcarrier band, and at this time, the ONU in the abnormal subcarrier band may be determined as the abnormal ONU.

S608: the detection process is ended.

Based on the embodiment shown in FIG. 6, after the detection process is ended, all the abnormal ONUs exist in the abnormal subcarrier band, and the abnormal ONUs in the abnormal subcarrier band include abnormal ONUs that can be successfully scheduled and/or abnormal ONUs that cannot be successfully scheduled.

In the embodiments shown in FIG. 3 to FIG. 6 above, the specific implementation of each step may refer to the specific implementation of the corresponding step in the embodiment shown in FIG. 2, which will not be explained in detail here.

It should be noted that in practical application scenarios, if the idle subcarrier band exists among the plurality of subcarrier bands, the detection of the abnormal ONU may be implemented based on any of the embodiments shown in FIG. 3 to FIG. 6. Furthermore, if it is required to use the minimum number of subcarrier bands to detect the abnormal ONU, it may be implemented based on the embodiment shown in FIG. 6. If the idle subcarrier band does not exist among the plurality of subcarrier bands, the detection of the abnormal ONU may be implemented based on any of the embodiments shown in FIG. 5 or FIG. 6. Furthermore, if it is required to use the minimum number of subcarrier bands to detect the abnormal ONU, it may be implemented based on the embodiment shown in FIG. 6.

In the embodiment of the present application, after the abnormal ONU in the abnormal subcarrier band is detected, optionally, these abnormal ONUs may further be marked, and a detection result of the abnormal ONUs are reported. The detection result of the abnormal ONUs may include identification of the abnormal ONUs. When reported, the detection result may be reported to a management device in the background. The management device may prompt the management personnel in the background which ONUs are abnormal based on the detection result, so as to carry out corresponding fault handling for these abnormal ONUs.

Optionally, in a case where the normal ONUs are included in the abnormal subcarrier band, for these normal ONUs, in the detection process of the abnormal ONUs above, after scheduling the normal ONUs to the test detection band, the normal ONUs may continue to be retained on the test detection band and perform data transmission based on the test detection band, or the normal ONUs may also be scheduled from the test detection band to other normal subcarrier bands in the plurality of subcarrier bands. In this way, it may ensure normal data transmission of the normal ONUs based on the test detection band or other normal subcarrier bands.

Based on the technical solutions provided in the embodiments of the present application, in a scenario where a PON system uses a plurality of subcarrier bands for uplink, downlink, and/or uplink and downlink transmission, after an abnormal subcarrier band is detected, the characteristics of multiple subcarriers may be utilized to schedule the ONU in the abnormal subcarrier band to other subcarrier bands (i.e., the test detection band) of the plurality of subcarrier bands, and judge whether the scheduled ONU is abnormal by whether an anomaly occurs in other subcarrier bands. Therefore, it is possible to effectively detect which ONUs in the abnormal subcarrier bands are abnormal, thereby achieving effective detection of the abnormal ONUs. For the detected abnormal ONUs, the abnormal ONUs may be scheduled to be abandoned subcarrier band and/or retained in the abnormal subcarrier band, thus ensuring the normal operation of the actual PON system under the current network.

The specific embodiments of the present application are described above. Other embodiments are within the scope of the appended claims. In some cases, the actions or steps recorded in the claims may be executed in a sequence different from that of the embodiment and may still achieve expected results. In addition, the process depicted in the accompanying drawings does not necessarily require a particular order or sequential order shown to achieve the expected results. In some implementation, multitasking and parallel processing may be possible or may be advantageous.

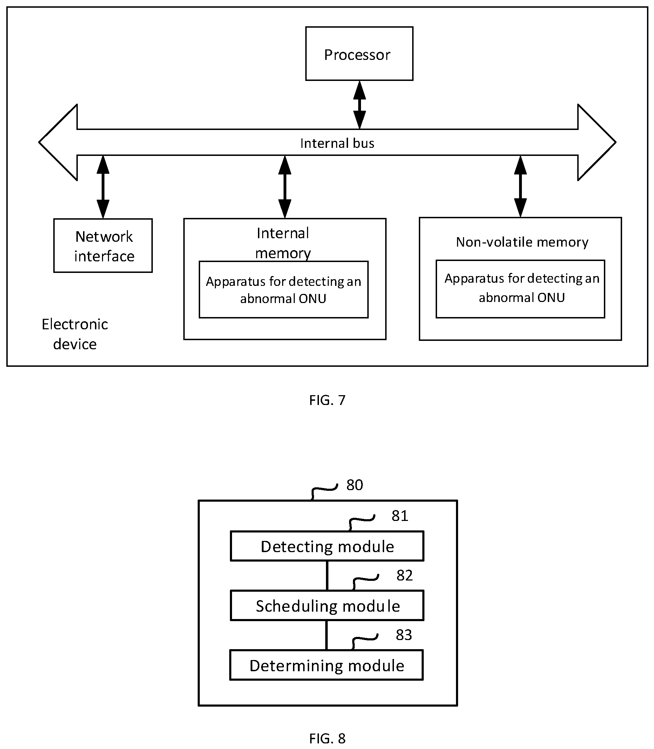

FIG. 7 is a schematic structural diagram of an electronic device in one embodiment of the present application. Referring to FIG. 7, at a hardware level, the electronic device includes a processor, optionally further includes an internal bus, a network interface, and a memory. The memory may include an internal memory such as a high-speed random-access memory (RAM), or a non-volatile memory such as at least one disk memory. Certainly, the electronic device may also include hardware required for other services.

The processor, the network interface, and the memory may be interconnected by the internal bus, and the internal bus may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, only one bi-directional arrow is used to indicate the bus in FIG. 7, but it does not indicate only one bus or one type of bus.

The memory is configured to store a program. Specifically, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form an apparatus for detecting an abnormal ONU at a logical level. The processor executes programs stored in the memory and is specifically configured to perform the following operations: detecting a plurality of subcarrier bands; scheduling, in a case where an abnormal subcarrier band is detected, an ONU in the abnormal subcarrier band to a test detection band among the plurality of subcarrier bands; and judging whether an anomaly occurs in the test detection band, and determining an abnormal ONU in the abnormal subcarrier band according to a judgment result.

The above method performed by the apparatus for detecting the abnormal ONU disclosed in the embodiment shown in FIG. 7 of the present application may be applied to the processor or implemented by the processor. The processor may be an integrated circuit chip having a signal processing capability. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gate or transistor logic devices, and discrete hardware components. The various methods, steps, and logic block diagrams disclosed in the present application may be implemented or performed. The general-purpose processor may be a microprocessor or this processor may also be any conventional processor, etc. The steps of the method disclosed in conjunction with the present application may be directly embodied to be executed and completed by a hardware decoding processor, or may be executed and completed through a combination of hardware and software modules in the decoding processor. A software module may be located in a random access memory, a flash memory, a read only memory, a programmable read only memory, or an electrically erasable programmable memory, a register and other mature storage mediums in the art. The storage medium is located in the memory. The processor reads information in the memory and completes the steps of the above method in combination with hardware thereof.

The electronic device may further perform the methods shown in FIG. 2 to FIG. 6 and implement the functions of the apparatus for detecting the abnormal ONU in the embodiments shown in FIG. 2 to FIG. 6, which is not repeated here in the present application.

Certainly, in addition to the software implementations, the electronic device of the present application does not exclude other implementations, such as logic devices or combinations of software and hardware, that is, an execution body of the following process flows is not limited to each logic unit, but may be hardware or logic devices.

The present application further provides a computer-readable storage medium. The computer-readable storage medium stores one or more programs. The one or more programs include instructions, and the instructions, when executed by a portable electronic device including a plurality of application programs, can cause the portable electronic device to perform the methods in the embodiments shown in FIG. 2 to FIG. 6 and be specifically configured to perform the following operations:
detecting a plurality of subcarrier bands;
scheduling, in a case where an abnormal subcarrier band is detected, an ONU in the abnormal subcarrier band to a test detection band among the plurality of subcarrier bands; and
judging whether an anomaly occurs in the test detection band, and determining an abnormal ONU in the abnormal subcarrier band according to a judgment result.

FIG. 8 is a schematic structural diagram of an apparatus 80 for detecting an abnormal ONU in one embodiment of the present application. Please refer to FIG. 8, in one software implementation, the apparatus 80 for detecting the abnormal ONU may include a detecting module 81, a scheduling module 82, and a determining module 83. The detecting module 81 detects a plurality of subcarrier bands; the scheduling module 82 schedules, in a case where an abnormal subcarrier band is detected, an ONU in the abnormal subcarrier band to a test detection band among the plurality of subcarrier bands; and the determining module 83 judges whether an anomaly occurs in the test detection band, and determines an abnormal ONU in the abnormal subcarrier band according to a judgment result.

Optionally, determining, by the determining module 83, the abnormal ONU in the abnormal subcarrier band according to the judgment result includes: determining, for any to-be-detected ONU in the abnormal subcarrier band, the to-be-detected ONU as the abnormal ONU in a case where the judgment result is that an anomaly occurs in the test detection band after the to-be-detected ONU is scheduled to the test detection band.

Optionally, the scheduling module 82 is further configured for: scheduling the abnormal ONU to an abandoned subcarrier band; or, scheduling the abnormal ONU to the abnormal subcarrier band.

Optionally, in a case of scheduling the abnormal ONU to the abnormal subcarrier, the scheduling module 82 is further configured for: judging whether ONUs in the abnormal subcarrier band have been traversed; scheduling ONUs that have not been traversed to the test detection band in a case where the ONUs in the abnormal subcarrier band have not been traversed; and ending anomaly detection of the ONUs in a case where the ONUs in the abnormal subcarrier band have been traversed.

Optionally, in a case of scheduling the abnormal ONU to the abandoned subcarrier band, the scheduling module 82 is further configured for: judging whether the abnormal subcarrier band returns to normal; and ending anomaly detection of the ONU in a case where the abnormal subcarrier band returns to normal.

Optionally, the scheduling module 82 is further configured for: judging whether ONUs in the abnormal subcarrier band have been traversed in a case where the abnormal subcarrier band does not return to normal; scheduling ONUs that have not been traversed to the test detection band in a case where the ONUs in the abnormal subcarrier band have not been traversed; and determining, in a case where the ONUs in the abnormal subcarrier band have been traversed, that an ONU not successfully scheduled exists in the abnormal subcarrier band, and determining the ONU not successfully scheduled as the abnormal ONU.

Optionally, determining, by the determining module 83, the abnormal ONU in the abnormal subcarrier band according to the judgment result includes: judging, for any to-be-detected ONU in the abnormal subcarrier band, whether ONUs in the abnormal subcarrier band have been traversed in a case where the judgment result is that no anomaly occurs in the test detection band after the to-be-detected ONU is scheduled to the test detection band. The scheduling module 82 is further configured for: scheduling ONUs that have not been traversed to the test detection band in a case where the ONUs in the abnormal subcarrier band have not been traversed. The determining module 83 is further configured for: judging, in a case where the ONUs in the abnormal subcarrier band have been traversed, whether an ONU not successfully scheduled exists in the abnormal subcarrier band, and determining, if yes, the ONU not successfully scheduled as the abnormal ONU.

Optionally, detecting, by the detecting module 81, the plurality of subcarrier bands includes at least one of the following: detecting whether a bit error occurs in the plurality of subcarrier bands; detecting whether a packet loss occurs in the plurality of subcarrier bands; or detecting whether an abnormal fluctuation occurs in power of the plurality of subcarrier bands; wherein, for each subcarrier band, it represents that the subcarrier band is an abnormal subcarrier band in a case where the subcarrier band satisfies at least one of the following: a bit error occurs in the subcarrier band; a packet loss occurs in subcarrier band; or an abnormal fluctuation occurs in power of the subcarrier band.

Optionally, the test detection band is an idle subcarrier band among the plurality of subcarrier bands; or, the test detection band is a subcarrier band among the plurality of subcarrier bands that does not have an anomaly and has traffic less than a preset threshold.

Optionally, scheduling, by the scheduling module 82, the ONU in the abnormal subcarrier band to the test detection band among the plurality of subcarrier bands includes: scheduling the ONUs in the abnormal subcarrier band to the test detection band in N separate times, with one ONU scheduled to the test detection band each time, where N is the number of ONUs in the abnormal subcarrier band. Judging, by the determining module 83, whether the anomaly occurs in the test detection band, and determining the abnormal ONU in the abnormal subcarrier band according to the judgment result includes: judging, after scheduling one to-be-detected ONU in the abnormal subcarrier band to the test detection band each time, whether the anomaly occurs in the test detection band, and determining the abnormal ONU in the abnormal subcarrier band according to the judgment result.

Optionally, after determining the abnormal ONU in the abnormal subcarrier band, the determining module 83 is further configured for: marking the abnormal ONU in the abnormal subcarrier band, and reporting a detection result of the abnormal ONU.

Optionally, the scheduling module 82 is further configured for: retaining, for a normal ONU in the abnormal subcarrier band, the normal ONU in the test detection band, or scheduling the normal ONU to other normal subcarrier bands in the plurality of subcarrier bands.

Optionally, the apparatus 80 for detecting the abnormal ONU is applied to at least one of the following: a PON system using the plurality of subcarrier bands for uplink transmission; a PON system using the plurality of subcarrier bands for downlink transmission; or a PON system using the plurality of subcarrier bands for uplink transmission and downlink transmission.

The apparatus 80 for detecting the abnormal ONU provided in the embodiment of the present application may further perform the methods shown in FIG. 2 to FIG. 6 and implement the functions of the apparatus 80 for detecting the abnormal ONU in the embodiments shown in FIG. 2 to FIG. 6, which is not repeated here in the present application.

An embodiment of the present application further provides a system for detecting an abnormal ONU. The system for detecting includes an OLT and a plurality of ONUs. The OLT may use a plurality of subcarrier bands to perform uplink transmission, downlink transmission, or uplink and downlink transmission with the plurality of ONUs, and one or more ONUs may exist in one subcarrier band. When an abnormal ONU occurs in a certain subcarrier band, the OLT may effectively detect the abnormal ONU. Detecting the abnormal ONU by the OLT includes the following steps: detecting a plurality of subcarrier bands; scheduling, in a case where an abnormal subcarrier band is detected, an ONU in the abnormal subcarrier band to a test detection band among the plurality of subcarrier bands; and judging whether an anomaly occurs in the test detection band, and determining an abnormal ONU in the abnormal subcarrier band according to a judgment result.

The specific implementation of the above steps may refer to the specific implementation of the corresponding steps in the embodiment shown in FIG. 2, which will not be repeated here.

In the system for detecting the abnormal ONU provided in the embodiment of the present application, the OLT may detect whether the abnormal subcarrier band exists in the plurality of subcarrier bands. After the abnormal subcarrier band is detected, the characteristics of multiple subcarriers may be utilized to schedule the ONU in the abnormal subcarrier band to other subcarrier bands (i.e., the test detection band) of the plurality of subcarrier bands, and judge whether the scheduled ONU is abnormal by whether an anomaly occurs in other subcarrier bands. Therefore, it is possible to effectively detect which ONUs in the abnormal subcarrier bands are abnormal ONUs, thereby achieving effective detection of the abnormal ONUs.

In total, the above is merely preferred embodiments of the present application and is not intended to limit the scope of protection of the present application. Any modification, equivalent replacement, improvement and the like made within the spirit and principle of the present application shall all be contained in the scope of protection of the present application.

The system, apparatus, module or unit illustrated in the above embodiments may be specifically embodied by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

The computer-readable medium includes permanent and non-permanent, and removable and non-removable media, and may achieve information storage through any method or technology. Information can be computer-readable instructions, data structures, modules of programs, or other data. Examples of the computer storage medium include, but are not limited to, a phase-change random access memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a compact disc read-only memory (CD-ROM), a digital versatile disc (DVD) or other optical storage and magnetic cassette tape, magnetic-tape magnetic-disk storage or other magnetic storage devices or any other non-transmission media, and may be used to store information that can be accessed by a computing apparatus. According to the definition herein, the computer-readable medium does not include transitory media, such as modulated data signals and carriers.

It should further be noted that, the terms "include," "comprise" or any other variants thereof are intended to cover non-exclusive inclusion, so that a process, method, article or apparatus including a series of elements not only includes those elements, but also includes other elements not clearly listed, or also includes elements inherent to this process, method, article or apparatus. Without further limitations, the elements limited by a statement "including one..." do not exclude the existence of other identical elements in the process, method, commodity or device that includes the said elements.

The various embodiments in the present application are described in a progressive manner, and the same and similar parts between the various embodiments can refer to each other. Each embodiment focuses on contents different from other embodiments. In particular, as for the system embodiments, as they are basically similar to the method embodiments, the description is relatively simple. As for related parts, please refer to part of the description in the method embodiments.

## Claims

1. An abnormal ONU detection method, comprising:
detecting a plurality of subcarrier bands;
scheduling, in a case where an abnormal subcarrier band is detected, an ONU in the abnormal subcarrier band to a test detection band among the plurality of subcarrier bands; and
judging whether an anomaly occurs in the test detection band, and determining an abnormal ONU in the abnormal subcarrier band according to a judgment result.

2. The detection method according to claim 1, wherein determining the abnormal ONU in the abnormal subcarrier band according to the judgment result comprises:
determining, for any to-be-detected ONU in the abnormal subcarrier band, the to-be-detected ONU as the abnormal ONU in a case where the judgment result is that the anomaly occurs in the test detection band after the to-be-detected ONU is scheduled to the test detection band.

3. The detection method according to claim 2, further comprising:
scheduling the abnormal ONU to an abandoned subcarrier band; or,
scheduling the abnormal ONU to the abnormal subcarrier band.

4. The detection method according to claim 3, wherein in a case of scheduling the abnormal ONU to the abnormal subcarrier band, the method further comprises:
judging whether ONUs in the abnormal subcarrier band have been traversed;
scheduling ONUs that have not been traversed to the test detection band in a case where the ONUs in the abnormal subcarrier band have not been traversed; and
ending anomaly detection of the ONUs in a case where the ONUs in the abnormal subcarrier band have been traversed.

5. The detection method according to claim 3, wherein in a case of scheduling the abnormal ONU to the abandoned subcarrier band, the method further comprises:
judging whether the abnormal subcarrier band returns to normal; and
ending anomaly detection of the ONU in a case where the abnormal subcarrier band returns to normal.

6. The detection method according to claim 5, further comprising:
judging whether ONUs in the abnormal subcarrier band have been traversed in a case where the abnormal subcarrier band does not return to normal;
scheduling ONUs that have not been traversed to the test detection band in a case where the ONUs in the abnormal subcarrier band have not been traversed; and
determining, in a case where the ONUs in the abnormal subcarrier band have been traversed, that an ONU not successfully scheduled exists in the abnormal subcarrier band, and determining the ONU not successfully scheduled as the abnormal ONU.

7. The detection method according to claim 1, wherein determining the abnormal ONU in the abnormal subcarrier band according to the judgment result comprises:
judging, for any to-be-detected ONU in the abnormal subcarrier band, whether ONUs in the abnormal subcarrier band have been traversed in a case where the judgment result is that no anomaly occurs in the test detection band after the to-be-detected ONU is scheduled to the test detection band;
scheduling ONUs that have not been traversed to the test detection band in a case where the ONUs in the abnormal subcarrier band have not been traversed; and
judging, in a case where the ONUs in the abnormal subcarrier band have been traversed, whether an ONU not successfully scheduled exists in the abnormal subcarrier band, and determining, if yes, the ONU not successfully scheduled as the abnormal ONU.

8. The detection method according to claim 1, wherein detecting the plurality of subcarrier bands comprises at least one of the following:
detecting whether a bit error occurs in the plurality of subcarrier bands;
detecting whether a packet loss occurs in the plurality of subcarrier bands; or
detecting whether an abnormal fluctuation occurs in power of the plurality of subcarrier bands;
wherein for each subcarrier band, it represents that the subcarrier band is an abnormal subcarrier band in a case where the subcarrier band satisfies at least one of the following:
a bit error occurs in the subcarrier band;
a packet loss occurs in the subcarrier band; or
an abnormal fluctuation occurs in power of the subcarrier band.

9. The detection method according to claim 1, wherein the test detection band is an idle subcarrier band among the plurality of subcarrier bands; or,
the test detection band is a subcarrier band among the plurality of subcarrier bands that does not have an anomaly and has traffic less than a preset threshold.

10. The detection method according to claim 1, wherein scheduling the ONU in the abnormal subcarrier band to the test detection band among the plurality of subcarrier bands comprises:
scheduling ONUs in the abnormal subcarrier band to the test detection band in N separate times, with one ONU scheduled to the test detection band each time, where N is the number of the ONUs in the abnormal subcarrier band;
wherein judging whether the anomaly occurs in the test detection band, and determining the abnormal ONU in the abnormal subcarrier band according to the judgment result comprises:
judging, after scheduling one to-be-detected ONU in the abnormal subcarrier band to the test detection band each time, whether the anomaly occurs in the test detection band, and determining the abnormal ONU in the abnormal subcarrier band according to the judgment result.

11. The detection method according to claim 1, wherein after determining the abnormal ONU in the abnormal subcarrier band, the method further comprises:
marking the abnormal ONU in the abnormal subcarrier band, and reporting a detection result of the abnormal ONU.

12. The detection method according to claim 1, further comprising:
retaining, for a normal ONU in the abnormal subcarrier band, the normal ONU in the test detection band, or scheduling the normal ONU to other normal subcarrier bands in the plurality of subcarrier bands.

13. The detection method according to any one of claims 1 to 12, wherein the method is applied to at least one of the following:
a PON system using the plurality of subcarrier bands for uplink transmission;
a PON system using the plurality of subcarrier bands for downlink transmission; or
a PON system using the plurality of subcarrier bands for uplink transmission and downlink transmission.

14. An electronic device, comprising:
a processor; and
a memory, configured to store processor-executable instructions;
wherein the processor is configured to execute the instructions, so as to implement the method according to any one of claims 1 to 13.

15. A computer-readable storage medium, wherein instructions in the storage medium, when executed by a processor of an electronic device, cause the electronic device to be able to perform the method according to any one of claims 1 to 13.

16. A system for detecting an abnormal ONU, comprising an OLT and a plurality of ONUs, wherein
the OLT detects a plurality of subcarrier bands;
the OLT schedules, in a case where an abnormal subcarrier band is detected, an ONU in the abnormal subcarrier band to a test detection band among the plurality of subcarrier bands; and
the OLT judges whether an anomaly occurs in the test detection band, and determines an abnormal ONU in the abnormal subcarrier band according to a judgment result.
